# EUROPÄISCHE PATENTANMELDUNG

(11) **EP 3 498 430 A1**
(43) Veröffentlichungstag der Anmeldung: **19.06.2019**
(21) Anmeldenummer: 18205227.4
(22) Anmeldetag: 08.11.2018
(51) Int. Cl.: B25J 9/00

(54) **DELTA-ROBOTER SOWIE DAMIT AUSGESTATTETE ROBOTER-STRASSE**

(30) Priorität: 12.12.2017 DE 102017129598
(71) Anmelder: Gerhard Schubert GmbH, 74564 Crailsheim (DE)
(72) Erfinder: HAAF, Walter, 74564 Crailsheim (DE)
(74) Vertreter: Weickmann & Weickmann PartmbB

(57) **Zusammenfassung**

Um die mit geringen bewegten Massen auskommenden Delta-Roboter (50) in Durchlaufrichtung (100') einer Roboter-Straße (100) eng hintereinander anordnen zu können, wird
- einer der Zwischenwinkel (α1) zwischen den Befestigungsstellen der Roboter-Arme (3, 4, 5) an der Roboter-Basis (1) relativ zu den anderen Zwischenwinkel in verkleinert und
- der Delta-Roboter (50) mit der Winkelhalbierenden (12) dieses kleinen Zwischenwinkels (α1) quer, insbesondere lotrecht zur Durchlaufrichtung (100') der Roboter-Straße (100) darin angeordnet.

Durch die Verringerung des Zwischenwinkels (α1) wird der Arbeitsbereich des Delta-Roboters (50) in der Aufsicht betrachtet länglich oder elliptisch, mit seiner größten Erstreckungsrichtung in Richtung der Winkelhalbierenden (12) dieses kleinsten Zwischenwinkels (α1).

## Beschreibung

### I. Anwendungsgebiet

Die Erfindung betrifft Delta-Roboter sowie deren Verwendung in einer Roboter-Straße, in der sie insbesondere zum Umsetzen von Produkten von einem Produkt-Band in Behälter und/oder auf ein Behälter-Band dienen.

### II. Technischer Hintergrund

Roboter werden in der Industrie vielfach eingesetzt und besitzen an ihrem vorderen, freien Ende ein Bearbeitungswerkzeug oder ein Greifwerkzeug, um ein Produkt ergreifen, halten und bewegen zu können. Je nach Anwendung soll sich das Werkzeug meist in allen 3 Raumachsen bewegen können und um 1 bis 3 der Raumachsen schwenkbar sein.

Im Rahmen sogenannter Roboter-Straßen oder Picker-Straßen, werden Produkte in der Regel ungeordnet auf einem in Durchlaufrichtung laufenden Produkt-Band angeliefert und sollen in bereitstehende Behälter und dortige Nester für die Produkte umgesetzt werden.

Zu diesem Zweck sind in Durchlaufrichtung entlang der Picker-Straße beabstandet hintereinander mehrere Roboter angeordnet. Ausschlaggebende Kriterien einer solchen Roboter-Straße sind immer die Leistung der Roboterstraße, in aller Regel gemessen in Umsatzvorgängen pro Minute, aber auch der Raumbedarf, insbesondere die Größe der benötigten Aufstellfläche für eine solche Roboter-Straße.

Aus diesem Grund werden die Roboter - die in der Regel am Grundgestell der Roboter-Straße über dem Produktband befestigt sind - in Durchlaufrichtung möglichst eng beabstandet angeordnet, wobei jedoch einige Punkte zu beachten sind:
- Vorzugsweise sollen sich die dreidimensionalen Bewegungsbereiche
   - also der Raum der maximal von den Teilen des Roboters durchlaufen werden kann - und insbesondere die in der Aufsicht auf die Roboter-Straße betrachteten Bewegungsbereiche benachbarter Roboter einander nicht überlappen, um Kollisionen zu vermeiden. Wird ein Überlappen doch zugelassen, ist der Steuerungsaufwand zur Vermeidung der Kollision von Roboter-Armen wesentlich höher als ohne mögliche Überlappungen.
- Für eine enge Beabstandung muss die Roboter-Basis klein gehalten werden, vorzugsweise jedenfalls kleiner als der in der Aufsicht betrachtete Bewegungsbereich des Roboters und soll über diesen seitlich auch nicht hinausragen.
- Die möglichen Bewegungsgeschwindigkeiten und Beschleunigungen der Roboter-Arme sollen möglichst hoch sein, weshalb die dabei bewegten Massen möglichst gering gehalten werden sollen.

Als Roboterbauformen für solche Roboter-Straßen sind einerseits Gelenkarm-Roboter mit nur einem einzigen Gelenkarm bekannt, bei denen mindestens zwei Arm-Teile, in der Regel Oberarm und Unterarm sowie ggfs. Hand genannt, hintereinander gelenkig miteinander verbunden sind und am freien Ende des Gelenkarmes, das benötigte Werkzeug, bei einer Picker-Straße ein Greif-Werkzeug, befestigt ist.

Da hierbei häufig die die Schwenkbewegungen der einzelnen Arm-Teile zueinander bewirkenden Motore direkt an der jeweiligen Schwenkachse angeordnet sind oder von der Roboterbasis aus mittels einer ebenfalls ein relativ hohes Gewicht aufweisenden Mechanik übertragen werden müssen, sind die bei einem Umsetzvorgang zu bewegenden Massen eines solchen Gelenkarm-Roboters relativ hoch.

Eine andere Roboter-Bauform, die vor allem zum Greifen, Halten und Bewegen von kleinen Lasten häufig benutzt wird, sind sogenannte Delta-Roboter.

Wenn diese hängend angeordnet sind, ragen von einer oben angeordneten, meist plattenförmigen, Roboterbasis aus meist drei Roboter-Arme nach unten, und alle ihre freien unteren Enden sind jeweils an derselben Arbeits-Plattform, dem sogenannten Effektor, befestigt, an der das benötigte Werkzeug, etwa ein Greif-Werkzeug in Form eines Saugers, angeordnet ist.

Indem für jeden Arm gesteuert der Abstand zwischen seinem hinteren Ende, das an der Roboterbasis befestigt ist, und seinem vorderen Ende, das an dem Effektor befestigt ist, gesteuert veränderbar ist, kann der Effektor innerhalb des durch die Länge und Bewegungsmöglichkeiten der Roboter-Arme vorgegebenen Arbeitsbereiches in allen drei Raumrichtungen bewegt und auch in seiner Schwenklage verändert werden, sodass der Effektor sechs Freiheitsgrade besitzt.

Diese Bauform kann auch mehr als drei Roboterarme aufweisen, die aber alle an dem gleichen Effektor angreifen.

Für die Zwecke der vorliegenden Anmeldung soll definiert werden, dass der hier verwendete Begriff Delta-Roboter auch Bauformen mit mehr als drei Roboter-Armen zwischen Roboterbasis und Effektor umfasst.

Die Befestigungsstellen der in der Regel gleich aufgebauten, insbesondere identischen, Roboter-Arme an der Roboterbasis liegen nicht auf einer Geraden, sondern bilden ein Polygon, bei drei Roboter-Armen ein Dreieck, und liegen vorzugsweise in einer sogenannten Basis-Ebene, vorzugsweise auf einem Kreis um die Längsmitte - der Lotrechten auf die Basis-Ebene, die auch die axiale Richtung definiert - der Roboterbasis.

Die Befestigungsstellen der Roboter-Arme sind dabei über den Kreis in aller Regel gleichmäßig verteilt, sodass die Zwischenwinkel zwischen den von der Längsmitte der Roboterbasis ausgehenden radialen Strahlen zu den einzelnen Befestigungsstellen jeweils gleich groß sind, was einen kreisförmigen Arbeitsraum des Roboters, betrachtet in axialer Richtung, ergibt.

Der Vorteil der Delta-Roboter liegt in der geringen zu bewegenden Masse, da die Antriebsmotore in der Roboter-Basis angeordnet werden können und deren Masse nicht mitbewegt werden muss.

Um den Abstand zwischen dem hinteren und vorderen Ende eines Roboter-armes zu verändern, sind unterschiedliche Lösungen bei Delta-Robotern bekannt:
- Die häufigste ist diejenige, dass die Roboter-Arme Gelenkarme sind mit Oberarm und Unterarm. Der Oberarm ist dabei meist schwenkbar um eine, vorzugsweise nur eine, Schwenkachse an der Roboter-Basis befestigt, während der Unterarm meist schwenkbar um wenigstens zwei Achsen am Oberarm und/oder am Effektor befestigt ist.
   Die Schwenkachsen gegenüber der Roboter-Basis bilden dabei in der Regel jeweils Tangenten an den Kreis, auf dem die Befestigungsstellen der Roboter-Arme an der Roboter-Basis liegen.
   Da hierbei nur das Verschwenken des Oberarmes einen Antrieb benötigt, können alle Antriebe für alle vorhandenen Roboter-Arme in der Roboter-Basis angeordnet sein müssen beim Bewegen der Roboter-Armen nicht mitbewegt werden.
   Häufig ist der Unterarm redundant ausgebildet und besteht aus zwei, meist parallelen, Unterarm-Streben, die einerseits am freien Ende des Oberarmes, vorzugsweise auf jeweils einer Seite des freien Endes, befestigt sind und andererseits mit dem gleichen Relativabstand am Effektor. Die Unterarm-Streben sind synchron schwenkbar.
- Eine andere Lösung besteht darin, die nicht geknickten, geraden Roboter-Arme längenveränderbar, insbesondere teleskopierbar, auszugestalten, wobei ebenfalls der Antrieb für die Längenveränderbarkeit in der Roboterbasis angeordnet werden kann.
- Weitere Möglichkeiten der Abstands-Veränderung zwischen vorderen und hinteren Ende des Roboter-Armes sind ebenfalls möglich und erfindungsgemäß zulässig.

Der Nachteil der Delta-Roboter liegt in der relativ geringen zu bewältigenden Last sowie dem großen Bauraum, da die Roboter-Arme in der Aufsicht auf die Basis-Ebene betrachtet häufig einen Bewegungsbereich benötigen, der größer ist als der Arbeitsbereich oder anders ausgedrückt im Vergleich zum Bewegungsbereich der Roboter-Arme der bewältigbare Arbeitsraum der Arbeits-Plattform gering ist.

Genau dies ist jedoch ein Hindernis beim Einsetzen von Delta-Robotern in Roboterstraßen, da hierdurch der Mindestabstand, insbesondere in Durchlaufrichtung, mit dem die einzelnen Roboter innerhalb der Roboterstraße zueinander angeordnet werden können, vergleichsweise groß ist.

### III. Darstellung der Erfindung

### a) Technische Aufgabe

Es ist daher die Aufgabe gemäß der Erfindung, einen Delta-Roboter sowie eine damit ausgestattete Roboter-Straße zur Verfügung zu stellen, die die Nachteile des Delta-Roboters minimiert, insbesondere hinsichtlich des innerhalb einer Roboter-Straße benötigten Abstandes zwischen den Robotern in Durchlaufrichtung der Roboter-Straße.

### b) Lösung der Aufgabe

Diese Aufgabe wird durch die Merkmale der Ansprüche 1 und 10 gelöst. Vorteilhafte Ausführungsformen ergeben sich aus den Unteransprüchen.

Hinsichtlich eines einzelnen Delta-Roboters wird diese Aufgabe dadurch gelöst, und insbesondere der Bewegungsbereich der Roboter-Arme des Delta-Roboters dadurch minimiert, dass die Zwischenwinkel zwischen den in der Aufsicht auf die Roboterbasis in einem Polygon angeordneten Befestigungsstellen der Roboter-Arme an der Roboter-Basis spezifisch gewählt werden:
Falls es eine Basismitte gibt, da die Befestigungsstellen der Roboter-Arme an der Roboter-Basis alle auf einem Kreis liegen, handelt es sich bei den Zwischenwinkeln um die Radialstrahlen von dieser Basismitte zu den einzelnen Befestigungsstellen.

Falls die Eckpunkte des Polygons, also die Befestigungsstellen, nicht auf einem Kreis liegen, und somit kein geometrischer Mittelpunkt existiert, wird ersatzweise als Basis-Mitte der Schwerpunkt des in der Aufsicht auf die Roboter-Basis betrachteten Polygons gewählt.

Eine der Befestigungsstellen nicht in der Basisebene liegt, sondern zu dieser versetzt, ergibt sich dennoch in der Aufsicht, also in der Lotrechten zur Basis-Ebene der Roboter-Basis betrachtet ein Polygon.

Die Basis-Ebene wird dann durch diejenige Ebene definiert, in der die meisten Befestigungsstellen, was jedoch nur zum Tragen kommt, wenn es sich um mehr als drei Befestigungsstellen handelt.

Auch bei der Vorgabe für die Zwischenwinkel ist zwischen einer geraden und einer ungeraden Anzahl von Roboter-Armen, also Befestigungsstellen von Roboter-Armen an der Roboter-Basis, zu unterscheiden:
Bei einer ungeraden Anzahl, insbesondere bei drei Befestigungsstellen und damit Zwischenwinkeln, ist der eine Zwischenwinkel kleiner als jeder der anderen, größeren Zwischenwinkel.

Bei drei Zwischenwinkeln ergeben die Strahlen zu den Befestigungsstellen ein schmales Y.

Bei einer geraden Anzahl von Zwischenwinkeln ist entweder nur einer der Zwischenwinkel kleiner als jeder der anderen, größeren Zwischenwinkel oder - was die bevorzugte Lösung darstellt - die bei einer geraden Anzahl immer vorhandenen, genau einander diametral gegenüberliegenden Zwischenwinkel sind gleich groß, jedoch kleiner als jeder der anderen, größeren Zwischenwinkel.

Bei dieser Lösung fluchten vorzugsweise die Winkelhalbierenden dieser beiden einander gegenüberliegenden, gleich kleinen Zwischenwinkel zueinander.

Durch diese Vorgaben können die Befestigungsstellen zwar noch auf einem Kreis liegen, bilden jedoch ein schlankes, längliches Polygon, insbesondere Dreieck, zumindest wenn die Anzahl der Zwischenwinkel nicht über vier hinausgeht, und selbst dann können die verbleibenden größeren Zwischenwinkel so gewählt werden, dass das Polygon schlank und länglich geformt ist.

Dadurch wird auch der Bewegungsbereich der so angeordneten Roboter-Arme in der Aufsicht auf die Basisebene, also betrachtet in der axialen Richtung der Basisebene, länglich ausgebildet, was die Möglichkeit eröffnet, z.B. in einer Roboterstraße solche Delta-Roboter in Durchlaufrichtung sehr eng zueinander zu beabstanden, wenn die Winkelhalbierende durch diesen wenigstens einen kleinsten Winkel quer, vorzugsweise im rechten Winkel, zur Durchlaufrichtung durch die Roboterstraße angeordnet wird.

Vorzugsweise werden die anderen, größeren Zwischenwinkel jeweils gleich groß gewählt, was den Steuerungsaufwand in Grenzen hält.

Wenn dies jedoch zu einem Befestigungs-Polygon in der Basis-Ebene führt, welches nicht schlank genug ist, kann dies durch weitere Maßnahmen verbessert werden:
Die Winkelhalbierende durch den einen oder die beiden genau diametral gegenüberliegenden kleinen Zwischenwinkel definiert die Verlaufsrichtung eines Korridors, auf dessen Rändern die Befestigungsstellen der diesen wenigstens einen kleinen Zwischenwinkel begrenzenden Befestigungsstellen liegen, wodurch die Breite des Korridors festgelegt wird.

Der Bewegungsbereich der Roboter-Arme kann dadurch reduziert werden, dass die übrigen Befestigungsstellen, also die nicht den wenigstens einen kleinsten Zwischenwinkel begrenzenden Befestigungsstellen entweder in dem Korridor oder auf dessen Rändern liegen, jedenfalls nicht mehr als 30%, besser nicht mehr als 20%, besser nicht mehr als 10% außerhalb der Breite dieses Korridors.

Die optionale Bedingung, die anderen, größeren Zwischenwinkel alle gleich groß zu wählen, kann dabei durchaus beibehalten werden.

Der eine kleine Zwischenwinkel oder die beiden kleinen Zwischenwinkel sollten dabei um mindestens 10%, besser um mindestens 20%, besser um mindestens 25%, besser um mindestens 30%, kleiner sein als jeder der anderen, größeren Zwischenwinkel.

Für die erfindungsgemäße Lösung ist es unerheblich, auf welche Art und Weise der Abstand zwischen dem hinteren und dem vorderen Ende jedes Roboter-Armes verändert wird, also ob die einzelnen Roboter-Arme Gelenkarme sind, wie zum Stand der Technik beschrieben, oder gerade, nicht knickbare, jedoch in ihrer Länge ausfahrbare, insbesondere teleskopierbare, Roboter-Arme sind oder auf andere Art und Weise längenveränderbar sind.

Im Fall der Bauform der einzelnen Roboter-Arme als Gelenkarme ist der Oberarm an der Roboter-Basis in aller Regel schwenkbar nur um eine einzige Schwenkachse, wobei die Schwenkachsen der Roboter-Arme dann Tangenten an den Kreis bilden, falls die Befestigungsstellen der Roboter-Arme an der Roboter-Basis auf einem solchen Kreis liegen, ersatzweise Tangenten an eine geschlossene, durch die Eckpunkte des Polygons der Befestigungsstellen verlaufende optimal angenäherte Kurve.

Jeder Unterarm ist an dem Oberarm ebenfalls gelenkig befestigt, allerdings schwenkbar um nicht nur eine, sondern um zwei unterschiedliche Schwenkachsen, die jeweils quer zur Verlaufsrichtung des Oberarmes verlaufen.

Ebenso ist jeder Unterarm auch gegenüber dem Effektor um zwei unterschiedliche, sich kreuzende Schwenkachsen befestigt, die jeweils quer, insbesondere lotrecht, zur Verlaufsrichtung des jeweiligen Unterarmes liegen.

Die Unterarme der Roboter-Arme können redundant ausgebildet sein und aus zwei parallelen Armstreben bestehen, die synchron bewegbar sind und an ihrem hinteren Ende jeweils am Oberarm und mit ihrem vorderen Ende jeweils am Effektor befestigt sind, wie zuvor beschrieben jeweils um die zwei sich kreuzenden Schwenkachsen.

Auf diese Art und Weise wird ein Delta-Roboter geschaffen, der einerseits einen zumindest in einer Richtung schmalen Bewegungsbereich für seine Roboter-Arme benötigt, andererseits aber den Vorteil der geringen bewegten Massen eines solchen Delta-Roboters nutzt.

Hinsichtlich einer Roboter-Straße, deren Roboter den zuvor beschriebenen Delta-Robotern entsprechen, wird diese Aufgabe eben dadurch gelöst, dass die Delta-Roboter in Durchlaufrichtung der Produkte durch die Roboter-Straße, also beispielweise in Bewegungsrichtung des Produktbandes der Roboterstraße, eng benachbart so angeordnet sind, dass die Winkelhalbierende des wenigstens einen kleinen Zwischenwinkels jedes Delta-Roboters quer, insbesondere lotrecht, zu dieser Durchlaufrichtung angeordnet sind.

Die Winkelhalbierenden der Delta-Roboter sind dabei vorzugsweise parallel zueinander angeordnet, und wenn beidseits des Produktbandes jeweils eine Reihe von Delta-Robotern angeordnet ist, sind zumindest die Winkelhalbierenden der Delta-Roboter auf jeweils einer der beiden Seiten parallel zueinander angeordnet.

Vorzugsweise liegen die Winkelhalbierenden der Delta-Roboter, vorzugsweise aller Delta-Roboter, in der Straßenebene der Roboterstraße, die definiert wird durch die Durchlaufrichtung der Produkte einerseits und die Durchlaufrichtung der Behälter oder zumindest der Nester für die Produkte, in die sie anstelle der Behälter abgelegt werden sollen, andererseits, wobei diese beiden Durchlaufrichtungen häufig parallel zueinander liegen.

### c) Ausführungsbeispiele

Ausführungsformen gemäß der Erfindung sind im Folgenden beispielhaft näher beschrieben. Es zeigen:
- **Fig. 1a, b:**: einen bekannten Delta-Roboter in seiner Ausgangsstellung in der Seitenansicht sowie in der Ansicht von unten,
- **Fig. 2a:**: den erfindungsgemäßen Delta-Roboter in realistischer Darstellung in der Ansicht von unten,
- **Fig. 2b:**: den erfindungsgemäßen dreiarmigen Delta-Roboter gemäß Fig. 2a, als erste Bauform in einer Prinzip-Darstellung in der Aufsicht von oben,
- **Fig. 2c:**: in der gleichen Prinzip-Darstellung einen fünf-armigen Roboter in der Aufsicht von oben,
- **Fig. 3a:**: in Prinzip-Darstellung einen erfindungsgemäßen vier-armigen Delta-Roboter in der Aufsicht von oben,
- **Fig. 3b:**: einen erfindungsgemäßen sechs-armigen Delta-Roboter in der Aufsicht von oben,
- **Fig. 3c:**: in Prinzip-Darstellung einen acht-armigen Delta-Roboter in der Aufsicht von oben,
- **Fig. 4:**: eine Roboterstraße in der Aufsicht von oben.

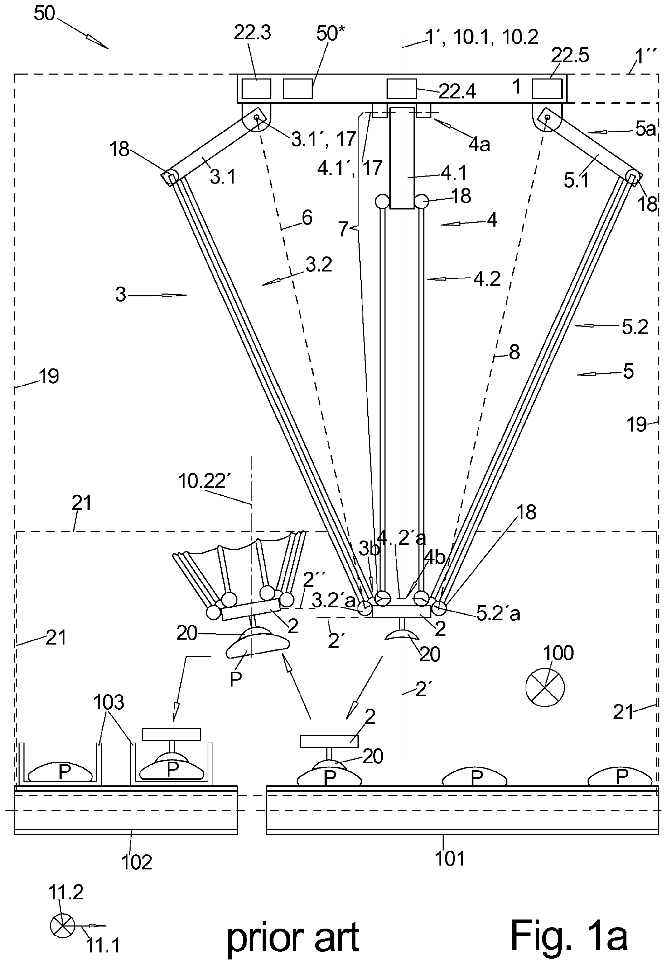

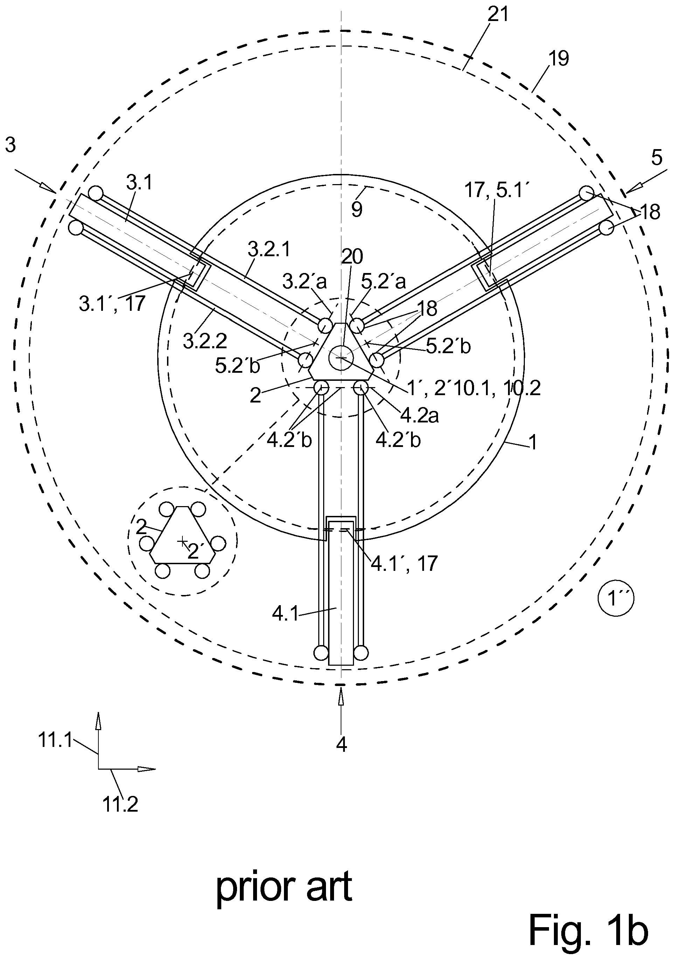

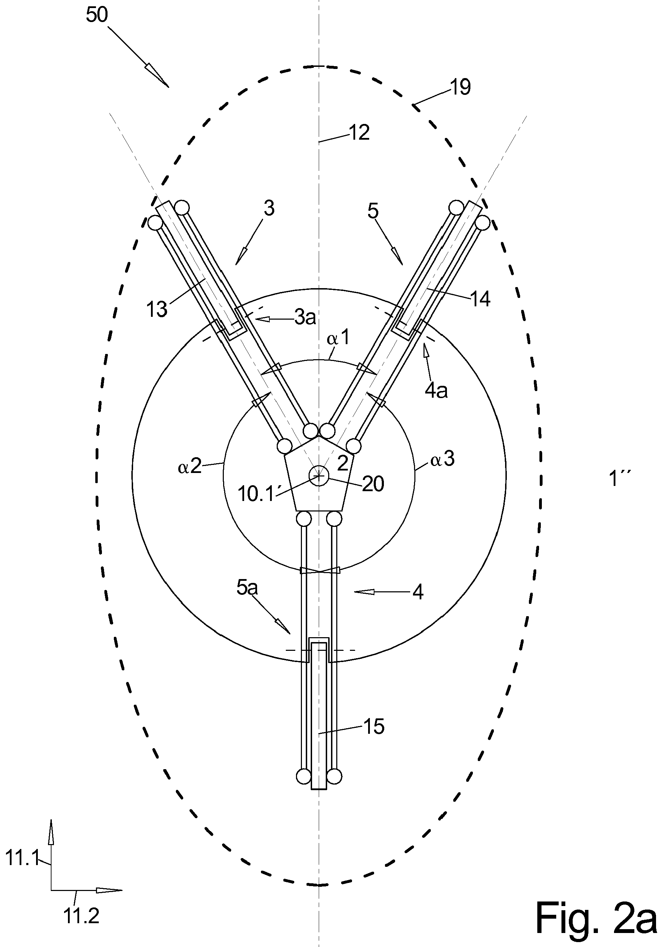

Anhand der **Figuren 1a****,** **b** sowie **Figur 2a** lässt sich der Aufbau einer typischen bekannten Bauform eines Delta-Roboters 50 als auch einer Bauform des erfindungsgemäßen Delta-Roboters 50, nämlich der Bauform mit drei Roboter-Armen, 3, 4, 5, erkennen:
Von einer meist platten-förmigen, insbesondere kreisscheiben-förmigen, Roboter-Basis 1, deren Hauptebene die Basis-Ebene 1" der Roboter-Basis 1 bildet, sind über den Umfang eines Basis-Kreis 23 gleichmäßig verteilt drei Roboter-Arme 3, 4, 5 mit ihrem hinteren Ende 3a, 4a, 5a befestigt. Die Basis-Ebene 1" kann auch durch die oberen Befestigungsstellen 3a, 4a, 5a definiert sein.

Die lotrechte zur Basis-Ebene 1" ist die axiale Richtung 10.1 der Roboter-Basis 1. Der Basis-Kreis 23 läuft konzentrisch um diese durch die Basismitte 1' der Basis-Ebene 1", die Basismitte 1', stehende axiale Richtung 10.1 um.

Von ihren hinteren Enden 3a, 4a, 5a ragen die Roboter-Arme 3, 4, 5 in diesem Fall nach unten ab, wo diese drei Roboter-Arme 3, 4, 5 mit ihrem vorderen, unteren Ende 3b, 4b, 5b an einem sogenannten Effektor 2 gelenkig befestigt sind, an dessen Unterseite das gewünschte Werkzeug 27, in diesem Fall ein Greifwerkzeug in Form eines Saugers 27, nach unten abragend angeordnet ist.

Bei dem in den **Figuren 1a****,** **b** **und** **Figur 2a** in der Ausgangslage dargestellten Delta-Roboter 50 befindet sich der Effektor 2 in axialer Richtung 10.1 der Roboter-Basis 1 genau unter deren Basis-Mitte 1', und die Effektor-Ebene 2", die Hauptebene dieses meist plattenförmigen Effektors 2, die auch durch die unteren Befestigungsstellen 3b, 4b, 5b der Roboter-Arme 3, 4, 5 am Effektor 2 definiert ist, liegt meist parallel zur Basis-Ebene 1" der plattenförmigen Roboter-Basis 1. die durch die Basis-Mitte 1' verlaufende axiale Richtung 10.1 der Roboterbasis 1 verläuft dann auch durch die Effekte-Mitte 2'.

Wir am besten aus **Fig. 1a** ersichtlich, kann durch gesteuerte Veränderung der Abstände 3*, 4*, 5* der einzelnen Roboter-Arme 3, 4, 5 zwischen deren hinterer, oberer Befestigungsstelle, z.B. 3a, und deren vorderer, unterer Befestigungsstelle, z.B. 3b, unabhängig voneinander der Effektor 2 nicht nur in der axialen Richtung 10.1, sondern auch in den beiden Querrichtungen 11.1, 11.2 hierzu verlagert werden und zusätzlich auch gekippt werden, sodass - wie in der zusätzlich in **Fig. 1a** eingezeichneten Position des unteren Teils des Delta-Roboters 50 - die Effektor-Ebene 2" nicht mehr parallel zur Basis-Ebene 1" verläuft, sondern geneigt hierzu.

Dadurch kann mit dem Greifwerkzeug, hier dem Sauger 27, ein Produkt P ergriffen werden, welches beispielsweise auf einem Produktband 101 liegend herantransportiert wird, indem der Sauger 27 von oben auf das Produkt P aufgesetzt wird und dieses mittels Unterdruck-Beaufschlagung hält, von dort abgehoben und beispielsweise in einem Behälter 103 positionsgenau abgelegt werden, welcher beispielsweise auf einem parallel zum Produktband 101 laufenden Behälterband 102 zu- und abgeführt werden kann in den Arbeitsbereich, also Greifbereich 21, dieses Delta-Roboters 50.

Dieser dreidimensionale Greifbereich 21 ist derjenige Bereich, innerhalb dessen der Sauger 27 als Werkzeug des Delta-Roboters 50 bewegt werden kann und der hier in der einen Querrichtung 11.1 die gesamte Breite der nebeneinander laufenden beiden Bänder, also Produktband 101 und Behälterband 102, abdecken muss, deren Oberseiten natürlich ebenfalls in axialer Richtung 10.1 innerhalb dessen Greifbereichs 21 liegen müssen.

In **Figur 1a** und auch **Figur 1b** ist zusätzlich zum Arbeitsbereich 21 oder auch Greifbereich 21 der Bewegungsbereich 28, der ebenfalls ein dreidimensionaler Bereich ist, dargestellt, welcher den Raum beschreibt, innerhalb dessen sich Teile des Delta-Roboters 50 maximal bewegen können, beispielsweise die Roboter-Arme 3, 4, 5. Dieser Bewegungsbereich 19 ist somit per Definition immer größer als der Greifbereich 21 des Werkzeuges, hier des Saugers 20.

Der Bewegungsbereich 28 als auch der Arbeitsbereich 21 besitzen bei dem um die axiale Richtung 10.1 symmetrisch ausgebildeten, bekannten Delta-Roboter 50 meist jeweils eine etwa zylindrische Form.

Für die Anordnung mehrerer solcher Delta-Roboter 50 nebeneinander, z.B. in einer Roboterstraße 100, ist der Bewegungsbereich 19 ein wichtiger Parameter, denn um Kollisionen benachbarter Delta-Roboter 50 sicher ausschließen zu können, werden diese so angeordnet, dass sich ihre Bewegungsbereiche 19 nicht überlappen.

**Figur 2a** zeigt nun einen erfindungsgemäßen Delta-Roboter 50 in der Ansicht von unten, also betrachtet lotrecht zur Basis-Ebene 1" in axialer Richtung 10.1, bei dem die in dieser Ansicht betrachteten Zwischenwinkel α1, α2, α3 zwischen den drei Roboter-Armen 3, 4, 5 - genauer: den in dieser Ansicht die Mittenlinien der Unterarme 3.1, 3.2, 3.3 wiedergebenden Radialstrahlen - nicht gleich groß sind, wie bei dem bekannten, symmetrischen drei-armigen Delta-Roboter gemäß **Figur 1a****,** **b** ersichtlich, sondern ein Zwischenwinkel α1 zwischen zwei benachbarten Roboter-Armen 3, 5, deren Radialstrahlen 13, 14, demgegenüber verkleinert ist auf hier ca. 50°, während die beiden anderen Zwischenwinkel α2, α3 entsprechend vergrößert sind und in diesem Fall auch gleich groß sind.

Dies bewirkt einen Bewegungsbereich 28, der in der Aufsicht betrachtet nicht mehr kreisförmig ist, also in dreidimensionaler Ansicht nicht mehr zylindrisch ist, sondern in der Aufsicht betrachtet etwa elliptisch, jedenfalls länglich mit der größten Erstreckung in Richtung der Winkelhalbierenden 12 des kleinsten Zwischenwinkels α1.

Die einzelnen Roboter-Arme 3, 4, 5 sind dabei so aufgebaut, dass die Roboter-Arme 3, 4, 5 dadurch hinsichtlich ihrer Abstände 3*, 4*, 5* zwischen deren hinteren und vorderen Befestigungsstellen veränderbar sind, indem die Roboter-Arme 3, 4, 5 als Gelenkarme ausgebildet sind mit einem Oberarm 3.1, 4.1, 5.1, der an der Roboter-Basis 1 schwenkbar um eine Schwenkachse 3.1', 4.1', 5.1' lediglich schwenkbar ist, also der Oberarm an dieser Stelle nur einen Freiheitsgrad besitzt.

An dem Oberarm 3.1 ist gelenkig jeweils ein Unterarm 3.2, 4.2, 5.2 befestigt, der mit seinem anderen Ende jeweils an dem gleichen Effektor 2 gelenkig angreift. Bei den Gelenken an den beiden Enden der Unterarme 3.2, 4.2, 5.2 handelt es sich um Gelenke mit mindestens zwei Freiheitsgraden, in dem diese jeweils um zwei quer zur Erstreckungsrichtung dieses Unterarmes 3.2, 4.2, 5.2 stehende Achsen schwenkbar sind. Vorzugsweise sind diese Gelenke an den beiden Enden der Unterarme 3.2, 4.2, 5.2 als Kugelgelenke oder Kardan-Gelenke ausgeführt.

Zusätzlich besteht jeder Unterarm z.B. 3.2 aus zwei parallel zueinander verlaufenden Unterarm-Streben 3.2.1, 3.2.2, von denen vorzugsweise je einer auf je einer Seite des Oberarmes 3.1 angeordnet ist. Die Verbindungslinie durch die beiden oberen Gelenke dieser beiden Unterarm-Streben 3.2.1, 3.2.2 verläuft parallel zu der Verbindungslinie durch die unteren Gelenke dieser beiden Unterarm-Streben 3.2.1, 3.2.2.

Somit gibt es von jedem Roboter-Arm 3, 4, 5 in der praktischen Ausführung je zwei untere Befestigungsstellen 3b, da jedoch die beiden Unterarm-Streben 3.2.1, 3.2.2 immer synchron bewegt werden, entspricht dies einer einzigen virtuellen unteren Befestigungsstelle 3a zwischen den beiden realen Gelenken der Unterarm-Streben 3.2.1, 3.2.2 gegenüber dem Effektor 2.

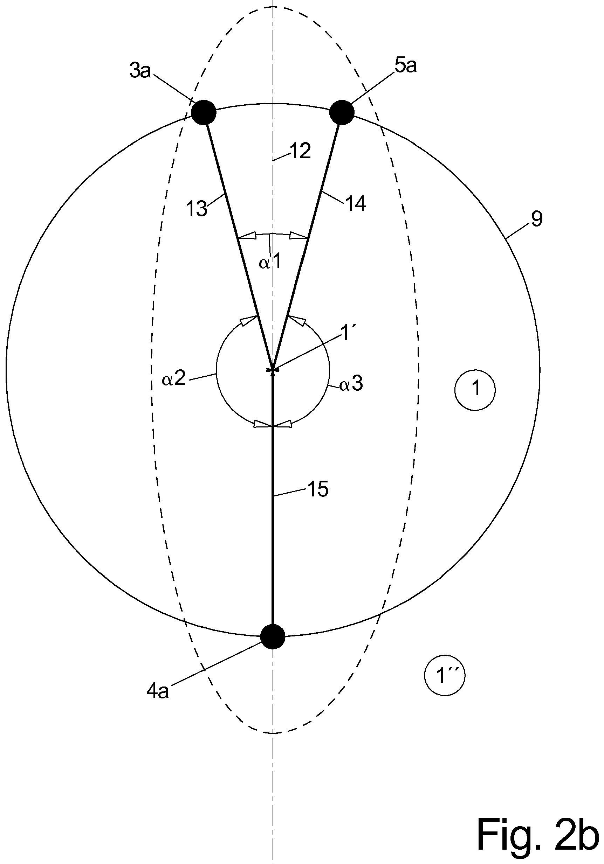

**Figur 2b** zeigt in der Aufsicht von oben auf die Roboter-Basis 1 und deren Basis-Ebene 1" den erfindungsgemäßen Delta-Roboter 50 gemäß **Figur 2a** - wiederum in der Ausgangslage - lediglich in Prinzip-Darstellung, bei der lediglich symbolisch Radial-Strahlen 13, 14, 15 , die gemäß **Figur 2a** die Mittenlinien der Oberarme 3.1, 4.1, 5.1 der Roboterarme 3, 4, 5 sind und sich in der Basis-Mitte 1' treffen, an Stelle der Roboter-Arme 3, 4, 5 eingezeichnet sind und von der Basis-Mitte 1' aus durch die jeweiligen hinteren Befestigungsstellen 3a, 4a, 5a der einzelnen Roboter-Arme 3, 4, 5 an der Basis 1 verlaufen.

In **Figur 1a** ist auch der Prinzip-bedingte Vorteil eines Delta-Roboters 50 erkennbar:
Nur die einachsig schwenkbaren Oberarme 3.1, 4.1, 5.1 müssen - gesteuert von einer Roboter-Steuerung 50*- unabhängig voneinander von jeweils einem Motor 22.3, 22.4, 22.5 angetrieben werden, die somit an oder in der Roboter-Basis 1, die an einem Bauteil der Umgebung fix montiert ist, untergebracht sind und damit bei Bewegung des Delta-Roboters 50 nicht mit dessen beweglichen Teilen mit bewegt werden müssen, was die zu beschleunigenden Massen gering hält.

Die Unterarme 3.2, 4.2, 5.2 müssen in ihrer Schwenkstellung zum entsprechenden Oberarm 3.1, 4.1, 5.1 nicht aktiv eingestellt werden, sondern dies ergibt sich automatisch aufgrund der Verbindung aller drei Roboter-Arme 3, 4, 5 mit dem gleichen Effektor 2.

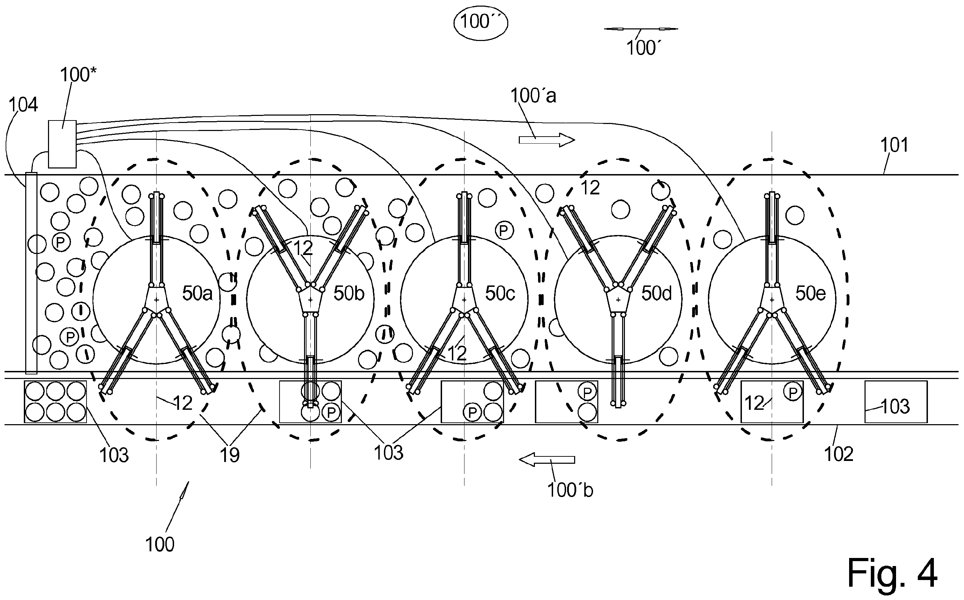

**Figur 4** zeigt in einer Aufsicht auf eine Roboter-Straße 100 von oben, also auf die Straßen-Ebene 100" eine Roboter-Straße, bei der nebeneinander Produkte P auf einem Produktband 101 von links in Produkt-Richtung 100'a herantransportiert und nach rechts weiterbewegt werden, und parallel dazu, in **Figur 4** unten dargestellt, in der Gegenrichtung auf einem Behälterband 102 aufgelegte und in der Behälter-Richtung 100'b heran transportierte Behälter 103 mit diesen Produkten P gefüllt werden sollen.

Hierzu sind in Durchlaufrichtung 100' - die in diesem Fall die Produkt-Richtung 100'a ebenso umfasst wie die Behälter-Richtung 100'b - nebeneinander in diesem Fall fünf Delta-Roboter 50a - 50e angeordnet, die so aneinander angenähert sind, dass sich ihre Bewegungsbereiche 19 gerade nicht überlappen.

In horizontaler Querrichtung zur Durchlaufrichtung 100' müssen die - innerhalb der Bewegungsbereiche 28 liegenden - Greifbereiche 21 der Delta-Roboter 50a bis 50e sowohl die Breite des Produktbandes 101 als auch des Behälterbandes 102 abdecken, damit jeder dieser Delta-Roboter 50a - 50e jedes beliebige Produkt P auf dem Behälterband 102 ergreifen, abheben und in einem in seinem Greifbereich 21 befindlichen Behälter 103 ablegen kann.

Sowohl Produktband 101 als auch Behälterband 102 werden von einer Straßen-Steuerung 100* gesteuert, die gleichzeitig mit den in jedem der Delta-Roboter 50a - 50e vorhandenen, nicht separat dargestellten, Roboter-Steuerungen 50* datentechnisch verbunden ist oder durch die Summe der Roboter-Steuerungen 50* gebildet wird.

Um die Position der einzelnen Produkte P vor dem Beginn des Umsetzbereiches - der Strecke, die in Durchlaufrichtung 100' die Delta-Roboter 50a - 50e, insbesondere deren Greifbereiche 21, abdecken - zu kennen, erstreckt sich quer oberhalb und über die gesamte Breite des Produktbandes 101 hinweg, wie bekannt ein Scanner 104, der die Position - und bei in der Aufsicht unrunden Produkten P auch deren Drehlage - auf dem Produkt Bd. 101 detektiert und an die Steuerung 100* meldet, die dies an die Roboter-Steuerungen 50* weitergibt, sodass jeder Roboter 50a - 50e zu jeder Zeit die momentane Position der in seinem Greifbereich 21 vorhandenen Produkte P kennt.

Hierfür wird der Steuerung 100* auch jedes vom Produktband 101 abgenommene Produkt gemeldet und ebenso jede durch die Roboter gefüllte Ablageposition in jedem einzelnen der Behälter 103.

Da in **Figur 4** die Delta-Roboter 50a - 50e so angeordnet sind, dass sich die Winkelhalbierende 12 ihres jeweils kleinsten Zwischenwinkels α1 zwischen den drei Roboter-Armen 3, 4, 5 im rechten Winkel zur Durchlaufrichtung 100' liegt - und in diesem Fall bei den hintereinander angeordneten Robotern 50a - 50e der kleinste Zwischenwinkel α1 von einem zum nächsten Roboter abwechselnd zum linken oder rechten Rand des Produktbandes 101 weist - ist auf den ersten Blick erkennbar, dass aufgrund des länglichen, etwa elliptischen Bewegungsbereiches 28 die kleinste in der Straßenebene 100" liegende Erstreckung des Bewegungsbereiches 28 in Durchlaufrichtung 100' liegt.

Auf einer Strecke in Durchlaufrichtung 100', auf der vier erfindungsgemäße Delta-Roboter 50a - 50d angeordnet werden können, konnten bei Verwendung konventioneller Delta-Roboter 50 gemäß **Figur 1b** mit drei gleichmäßig über den Umfang verteilten Roboter-Armen 3, 4, 5 und rundem Bewegungsbereich 28 - der sich ebenfalls über die Gesamtbreite von Produktband 101 plus Behälterband 102 hinwegerstrecken müsste - auf der gleichen Strecke nur zwei konventionelle Delta-Roboter 50 angeordnet werden.

Dies minimiert den Platzbedarf für eine vorgegebene Umsetzaufgabe in Durchlaufrichtung 100' drastisch und ist ein wichtiger Parameter bei einer Roboter-Straße 100.

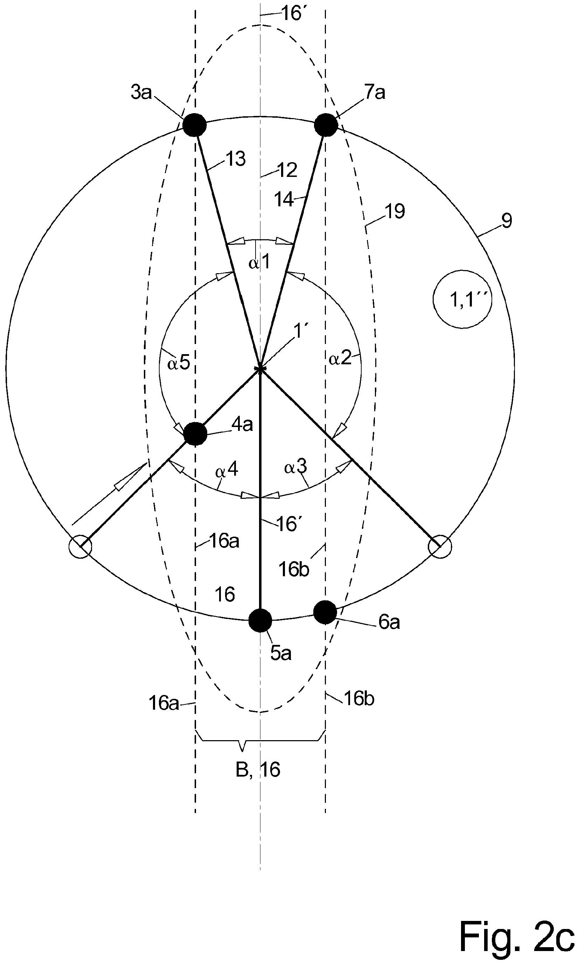

Das Verringern des in der Aufsicht betrachteten Bewegungsbereiches 28 in einer Querrichtung ist auch bei Bauformen von Delta-Robotern 50 mit mehr als drei Roboter-Armen möglich, wobei dann zwischen Bauformen mit einer ungeraden und Bauformen mit einer geraden Anzahl von Roboter-Armen unterschieden werden muss:
So zeigt **Figur 2c** eine weitere Bauform mit ungerader Anzahl von Roboter-Armen, nämlich mit fünf Roboter-Armen 3 - 7: Auch hier wird ein Zwischenwinkel α1, begrenzt wiederum durch die Radialstrahlen 13 und 17 von der Basis-Mitte 1' zu den hinteren Befestigungsstellen 3a, 7a der Roboter-Arme 3 und 7, gegenüber einer gleichmäßigen Umfangsverteilung verkleinert auf in diesem Fall z.B. ca. 30°.

Belässt man die übrigen drei Radialstrahlen in ihrer Lage, wie sie auch bei einer gleichmäßigen Verteilung der fünf Radialstrahlen und damit Roboter-Arme über 360° vorhanden wären, so liegt der Mittlere davon auf der Winkelhalbierenden 12 des kleinsten Zwischenwinkels α1 zwischen den Roboter-Armen 3 und 7, die Befestigungsstellen der beiden weiteren Roboter-Arme 4 und 6 würden dann jedoch von der Winkelhalbierenden 12 deutlich weiter entfernt sein als die Befestigungsstellen 3a und 7a auf dem Basis-Kreis 23, also an der Roboter-Basis 1.

Um genau dies zu vermeiden gibt es mehrere Methoden:
Die beiden Radialstrahlen dieser Roboter-Arme 4 und 6 könnten
- um die Basis-Mitte 1' verschwenkt werden in Richtung des mittleren, hier nach unten gerichteten, Roboter-Armes 5 wie beispielhaft am Roboter-Arm 6 und dessen hintere Befestigungsstelle 6a dargestellt oder
- die Befestigungsstellen könnten entlang ihres jeweiligen Radialstrahles in Richtung Basis-Mitte 1' verlagert werden, wie beispielhaft am Roboter-Arm 4 und dessen hintere Befestigungsstelle 4a dargestellt.

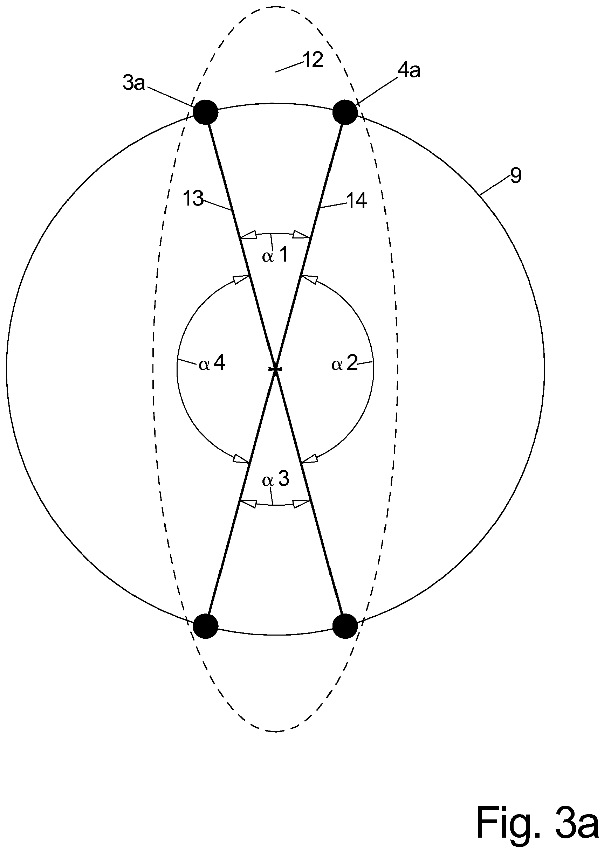

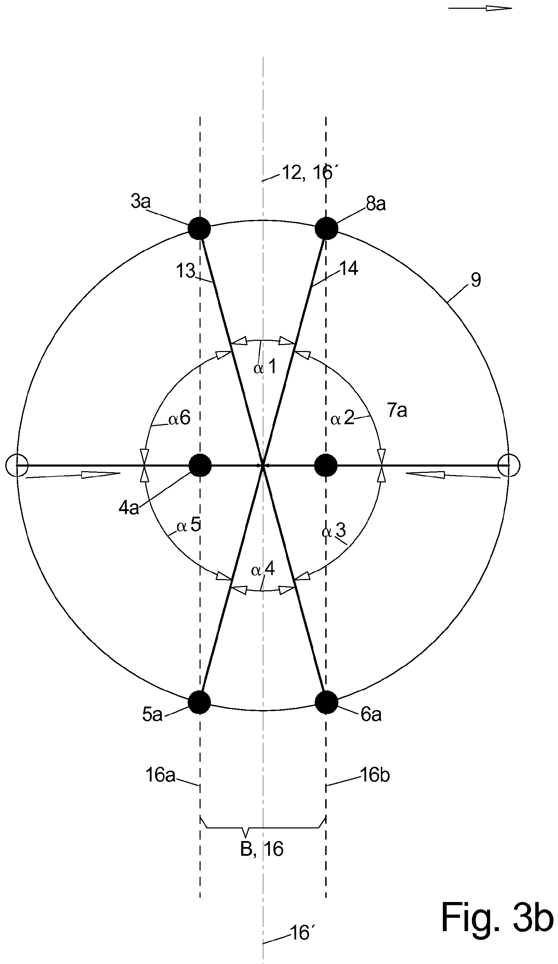

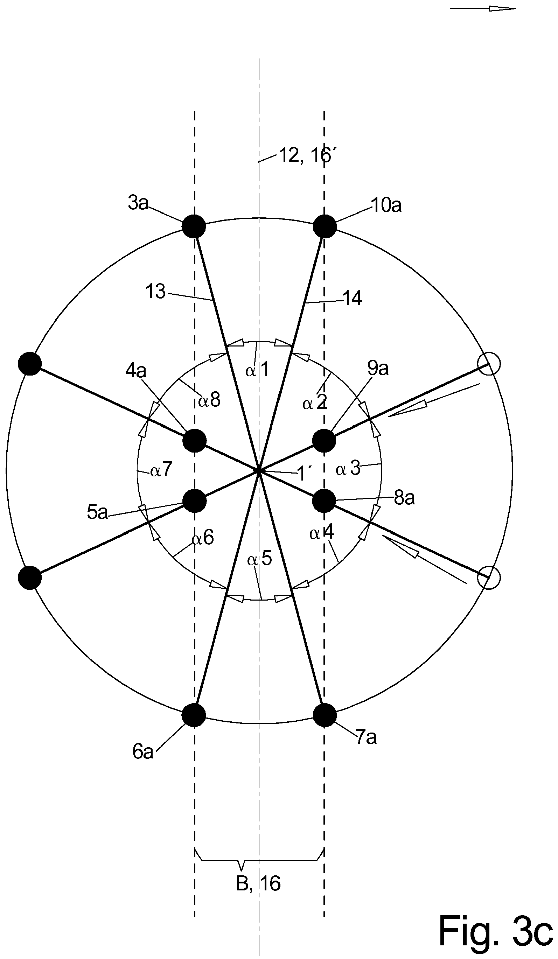

Bevorzugt sollen letztendlich alle hinteren Befestigungsstellen 3a - 7a innerhalb eines in dieser Aufsicht gemäß der **Figuren 2** **und** **3** dargestellten Korridors 26 liegen, dessen Verlaufsrichtung 26' durch die Winkelhalbierende 12 des kleinsten Zwischenwinkels α1 vorgegeben wird, und dessen Ränder 26a, 26b durch die beiden hinteren Befestigungsstellen 3a, 7a derjenigen Roboter-Arme 3, 7 verlaufen, deren Radialstrahlen 13, 17 diesen kleinsten Zwischenwinkel α1 begrenzen.

Vorzugsweise sollen dabei die übrigen, größeren Zwischenwinkel α2 bis α3 oder α2 - α5 jeweils gleich groß sein.

Dadurch wird ein länglicher bzw. fast elliptischer Bewegungsbereich 19 erreicht, der annähernd dem eines drei-armigen Delta-Roboters 50 mit gleich langen Radialstrahlen 13, 14, 15 entspricht.

Bei einem Delta-Roboter 50 mit vier Roboter-Armen 3 bis 6 und somit einer geraden Anzahl von Roboterarmen - wie in **Figur 3a** beispielhaft dargestellt - muss kein solcher Kanal definiert werden, da aufgrund der vier vorhanden Zwischenwinkel α1 - α5 die zwei einander gegenüberliegenden Zwischenwinkel α1 und α3 jeweils im gleichen Maß verkleinert werden sollten und damit identisch sind und somit die insgesamt vier hinteren Befestigungsstellen 3a, 4a, 5a, 6a dieser vier Roboter-Arme 3 bis 6 ohnehin automatisch einen solchen Kanal definieren, wenn die einander gegenüber liegenden Radialstrahlen 13 bis 16 zueinander fluchten, also alle vier Radialstrahlen ein Kreuz bilden.

**Figur 3b** zeigt eine weitere Lösung mit einer geraden Anzahl von Roboterarmen, nämlich einen sechs-armigen Delta-Roboter 50.

Auch hier werden die beiden einander diametral gegenüber liegenden Zwischenwinkel α1 und α4 von 60° aus, also von einer gleichmässigen Verteilung über den Umfang aus, im gleichen Maße reduziert, wobei die diese begrenzenden Radialstrahlen 13, 18 und 15, 16 paarweise zueinander fluchten und ein Kreuz bilden.

Diese vier Befestigungsstellen 3a, 5a, 6a, 8a definieren wiederum einen Korridor 26, dessen Verlaufsrichtung 26' mit der Winkelhalbierenden 12 durch diese beiden einander gegenüberliegenden kleinsten Winkel α1, α4 definiert wird.

Die bei normaler, gleichmäßiger Verteilung über den Umfang auf dem Basis-Kreis 23 liegenden beiden letzten hinteren Verbindungsstellen 4a, 7a werden auf ihrem Radialstrahl 14,17 soweit nach radial innen gefahren, dass sie jeweils auf dem einen der Ränder 26a, 26b dieses Korridors 26 zu liegen kommen.

**Figur 3c** zeigt eine analoge Lösung für einen acht-armigen Delta-Roboter 50 mit Radialstrahlen 13 bis 20 analog den acht Roboterarmen 3 bis 10, bei dem die bei analoger Vorgehensweise insgesamt vier außerhalb des Korridors 26 liegenden ursprünglichen Befestigungsstellen 4a, 5a, 8a, 9a ebenfalls entlang ihrer Radialstrahlen soweit Richtung Basis-Mitte 1' verlagert werden, dass sie wiederum auf jeweils einem der Ränder 26a, b des Korridors 26 liegen.

Vorzugsweisen sollten bei allen Ausführungsformen unabhängig von der Anzahl der Roboter-Arme die größeren Zwischenwinkel, also alle außer dem einen kleinen zwischen Winkel α1 oder den beiden einander gegenüberliegenden, kleinsten Zwischenwinkeln, jeweils gleich groß sein, um eine maximale Stabilität des Delta-Roboters 50 zu erzielen.

### BEZUGSZEICHENLISTE

- 1: Roboter-Basis
- 1": Basis-Ebene
- 1': Basis-Mitte
- 2: Effektor, Arbeits-Plattform
- 2": Effektor-Ebene
- 2': Effektor-Mitte
- 3: Roboter-Arm
- 3*: Abstand
- 3.1: Oberarm
- 3.2: Unterarm
- 3.2.1: Unterarm-Strebe
- 3.2.2: Unterarm-Strebe
- 3.1': Schwenkachse geg. 1
- 3.2'a, b: Schwenkachse geg. 2
- 3a: hintere Befestigungsstelle
- 3b: vordere Befestigungsstelle
- 4: Roboter-Arm
- 4*: Abstand
- 4': Schwenkachse geg. 1
- 4.1: Oberarm
- 4.2: Unterarm
- 4.1': Schwenkachse geg. 1
- 4.2'a, b: Schwenkachse geg. 2
- 4a: hintere Befestigungsstelle
- 4b: vordere Befestigungsstelle
- 5: Roboter-Arm
- 5*: Abstand
- 5.1: Oberarm
- 5.2: Unterarm
- 5': Schwenkachse geg. 1
- 5.1': Schwenkachse geg. 1
- 5.2'a, b: Schwenkachse geg. 2
- 5a: hintere Befestigungsstelle
- 5b: vordere Befestigungsstelle
- 6: Roboter-Arm
- 6*: Abstand
- 7: Roboter-Arm
- 7*: Abstand
- 8: Roboter-Arm
- 8*: Abstand
- 9: Roboter-Arm
- 9*: Abstand
- 10.1: axiale Richtung von 1
- 10.2: axiale Richtung von 2
- 11.1: Querrichtung
- 11.2: Querrichtung
- 12: Winkelhalbierende
- 13: Radialstrahl
- 14: Radialstrahl
- 15: Radialstrahl
- 16: Radialstrahl
- 17: Radialstrahl
- 18: Radialstrahl
- 19: Radialstrahl
- 20: Radialstrahl
- 21: Arbeitsbereich, Greifbereich
- 22.1: Motor
- 22.2: Motor
- 22.3: Motor
- 23: Basis-Kreis
- 24: Schwenkgelenk
- 25: Kugelgelenk
- 26: Korridor
- 26': Verlaufsrichtung
- 26a, b: Rand
- 27: Werkzeug, Sauger
- 28: Bewegungsbereich

- 50: Delta-Roboter
- 50a - e: Delta-Roboter
- 50*: Roboter-Steuerung

- 100: Roboter-Straße
- 100*: Straßen-Steuerung
- 100': Durchlaufrichtung
- 100'a: Produkt-Richtung
- 100'b: Behälter-Richtung
- 100": Straßenebene
- 101: Produktband
- 102: Behälterband
- 103: Behälter
- 104: Scanner
- α1: Zwischenwinkel
- α2: Zwischenwinkel
- α3: Zwischenwinkel

- P: Produkt

## Patentansprüche

1. **Delta-Roboter** (50) mit
- einer Roboter-Basis (1)
- einem Effektor (2)
- mindestens drei Roboter-Armen (3, 4, 5) die jeweils
- mit ihrer hinteren Befestigungstelle (3a, 4a, 5a) an der Roboter-Basis (1) und mit ihrer vorderen Befestigungsstelle (3b, 4b, 5b) an dem Effektor (2) befestigt sind,
- wobei deren Abstand (3*, 4*, 5*) zwischen ihrem jeweiligen hinteren Ende (3a, 4a, 5a) und ihrem vorderen Ende (3b, 4b, 5b) gesteuert veränderbar ist,
- einer Steuerung (50*), die alle beweglichen Teile des Delta-Roboters (50) steuert,
**dadurch gekennzeichnet, dass**
von den mindestens drei Zwischenwinkeln (α1, α2, α3) zwischen den mindestens drei Radialstrahlen (13, 14, 15) von der Basis-Mitte (1*) zu den Befestigungsstellen (3a, 4a, 5a) der drei Roboter-Arme (3, 4, 5) an der Roboter-Basis (1)
- bei einer ungeraden Anzahl von Zwischenwinkeln (α1, α2, α3) ein Zwischenwinkel (α1) kleiner ist als jeder der anderen, größeren Zwischenwinkel (α2, α3).
- bei einer geraden Anzahl von Zwischenwinkeln (α1, α2, a3, α4)
∘ entweder ein Zwischenwinkel (α1) kleiner ist als jeder der anderen, größeren Zwischenwinkel (a2, a3, α4)
∘ oder zwei einander diametral gegenüberliegende Zwischenwinkel (α1, α3) gleich groß, jedoch kleiner als jeder der anderen, größeren Zwischenwinkel (α2, α4) sind.

2. Delta-Roboter nach Anspruch 1,
**dadurch gekennzeichnet, dass**
die anderen, größeren Zwischenwinkel (z.B. α3, α4) gleich groß sind.

3. Delta-Roboter nach einem der vorhergehenden Ansprüche,
**dadurch gekennzeichnet, dass**
- in der Aufsicht auf die Basis-Ebene (1") die Winkelhalbierende (12) durch den einen kleinen zwischen Winkel (α1) oder die beiden diametral einander gegenüberliegenden kleinen Zwischenwinkel (α1, a3) die Verlaufsrichtung (26') eines Korridors (26) definiert, dessen Breite (B) dem Abstand der hinteren Befestigungsstellen (3a, 4a, 5a) der diesen wenigstens einen kleinen Zwischenwinkel (α1) begrenzenden hinteren Befestigungsstellen (3a, 4a, 5a) entspricht und
- die übrigen hinteren Befestigungsstellen (3a, 4a, 5a) entweder in dem Korridor (26) oder auf den Rändern (26a, b) des Korridors (16) liegen oder in der Richtung von dessen Breite (B) maximal 30 %, besser maximal 20 %, besser maximal 10 % außerhalb des Korridors (26) liegen.

4. Delta-Roboter nach einem der vorhergehenden Ansprüche,
**dadurch gekennzeichnet, dass**
- der eine kleine Zwischenwinkel (α1) oder die beiden kleinen Zwischenwinkel (α1, a3) um mindestens 10 %, besser mindestens 20 %, besser mindestens 25 % kleiner ist als jeder der anderen, größeren Zwischenwinkel (z.B. a3),
- und insbesondere die anderen Zwischenwinkel (z.B. a3) gleich groß sind.

5. Delta-Roboter nach einem der vorhergehenden Ansprüche,
**dadurch gekennzeichnet, dass**
- die hinteren Befestigungstellen (3a, 4a, 5a) in einer Basis-Ebene (1") liegen,
- insbesondere auf einem Basis-Kreis (23) um die Basis-Mitte (1*) der Roboter-Basis (1), die in der lotrecht auf der Basis-Ebene (1") stehenden axialen Richtung (10.1) der Roboter-Basis (1) verläuft, verteilt angeordnet sind.

6. Delta-Roboter nach einem der vorhergehenden Ansprüche,
**dadurch gekennzeichnet, dass**
der Abstand (3*, 4*, 5*) veränderbar ist, indem
- die Roboter-Armen (3, 4, 5) jeweils aus einem gelenkig an der Roboter-Basis (1) befestigten Oberarm (z.B. 3.1) und einem daran gelenkig befestigten Unterarm (z.B. 3.2) bestehen, wobei
- insbesondere der Oberarm (z.B. 3.1) schwenkbar um nur eine, insbesondere in der Basis-Ebene (1") liegende Schwenkachse (3.1') gegenüber der Roboter-Basis (1) befestigt ist,
und/oder
- insbesondere der Unterarm (z.B. 3.2) schwenkbar um zwei unterschiedliche, quer, insbesondere lotrecht, zur Verlaufsrichtung des Oberarmes (z.B. 3.1) liegende, Schwenkachsen (3.2'a, 3.2'b) gegenüber dem Oberarm (z.B. 3.1) und/oder gegenüber dem Effektor (2) befestigt ist.

7. Delta-Roboter nach einem der Ansprüche 1 - 5,
**dadurch gekennzeichnet, dass**
- der Roboter-Arm (3, 4, 5) teleskopierbar ist und mindestens zwei gesteuert relativ zueinander, insbesondere ineinander, verschiebbare Arm-Teilen (3.1, 3.2) umfasst.

8. Delta-Roboter nach einem der vorhergehenden Ansprüche,
**dadurch gekennzeichnet, dass**
die Roboter-Arme (3, 4, 5), insbesondere wenigstens deren Unterarme (3.2, 4.2, 5.2) jeweils zwei parallele Arm-Streben, insbesondere Unterarm-Streben (z.B. 3.2.1, 3.2.2), aufweisen.

9. Delta-Roboter nach einem der vorhergehenden Ansprüche,
**dadurch gekennzeichnet, dass**
die, insbesondere alle, Roboter-Arme (3, 4, 5) eines Delta-Roboters (50) gleich aufgebaut sind, insbesondere gleich lang sind, insbesondere identisch sind.

10. **Roboter-Straße** (100) mit mehreren in Durchlaufrichtung (100') der Produkte durch die Roboter-Straße (100) hintereinander angeordneten Delta-Robotern (50), insbesondere gemäß einem der vorhergehenden Ansprüche,
**dadurch gekennzeichnet, dass**
die Delta-Roboter (50), betrachtet in der Aufsicht auf die Straßen-Ebene (100"), die definiert wird durch die Durchlaufrichtungen (100') der Produkte einerseits und der Behälter oder Nester andererseits, mit der Winkelhalbieren (12) ihres wenigstens einen kleinsten Zwischenwinkels (α1) quer, insbesondere lotrecht, zur Durchlaufrichtung (100') angeordnet sind.

11. Roboter-Straße nach Anspruch 10,
**dadurch gekennzeichnet, dass**
die Winkelhalbierenden (12) mindestens zweier, insbesondere aller, Delta-Roboter (50) parallel zueinander verlaufen.
